# EUROPEAN PATENT SPECIFICATION

(11) **EP 4 611 356 B1**
(45) Date of publication and mention of the grant of the patent: **28.10.2026**
(21) Application number: 25159468.5
(22) Date of filing: 21.02.2025
(51) Int. Cl.: H04N 1/00

(54) **IMAGE DIAGNOSIS APPARATUS, METHOD FOR CONTROLLING SAME, AND IMAGE FORMING APPARATUS**
BILDDIAGNOSEVORRICHTUNG, VERFAHREN ZUR STEUERUNG DAVON UND BILDERZEUGUNGSVORRICHTUNG
APPAREIL DE DIAGNOSTIC D'IMAGE, SON PROCÉDÉ DE COMMANDE ET APPAREIL DE FORMATION D'IMAGE

(30) Priority: 29.02.2024 JP 2024030643
(43) Date of publication of application: 03.09.2025
(73) Proprietor: CANON KABUSHIKI KAISHA, Tokyo 146-8501 (JP)
(72) Inventor: YANO, Takaaki, Tokyo, 146-8501 (JP)
(74) Representative: Canon Europe Limited

(56) References cited:
- EP-A1- 4 300 201
- JP-A- 2019 191 326

## Description

### BACKGROUND OF THE INVENTION

### Field of the Invention

The present invention relates to an image diagnosis apparatus, a method for controlling the same, and an image forming apparatus.

### Description of the Related Art

Recent known image diagnosis functions use a sensor such as a scanner connected to an image forming apparatus to read a printed product and analyze the image to find an abnormality in the printed product. With such an image diagnosis function, by printing and reading a dedicated diagnosis chart, an abnormality in the apparatus with a printing abnormality caused by degradation or dirtiness of the components in the image forming apparatus can be detected, and the cause of the apparatus abnormality is specified and the necessary handling method it is presented to the user. The user, following the presented handling method, can change or clean parts and execute an adjustment function or, in a case where they are unable to fix it themself, contact a service provider and request a serviceman to fix it.

In a case where the user executes an image diagnosis, the configuration parameters for image diagnosis and the sheet format for printing the image diagnosis chart must be set. The user sets the sheet for the image diagnosis chart in the same manner as when setting the sheet for a normal print job from among the sheets set in the feeder. Depending on the image diagnosis settings, there are various pattern images that can be printed on the diagnosis chart. However, depending on the size of the set sheet, the pattern image may not fit in the determined region, a remainder region may be produced, or the like. In Japanese Patent Publication No. 2019-191326, a technique is proposed for performing control to generate a test pattern image for image diagnosis and disposing the test pattern image on a diagnosis chart and for efficiently disposing the necessary test pattern image on the basis of the sheet size used in printing the diagnosis chart.

However, the known technique described above has the following problems. Image diagnosis is a method in which a test pattern printed on a sheet is read by a scanner, and diagnosis is performed on the scanned image in order to find an apparatus abnormality in an apparatus. Thus, diagnosis can only be performed in the range of the test pattern printed on a diagnosis chart. In other words, the diagnosis region is dependent on the size of the sheet to be printed on.

Since the user can freely set the sheet to be used for the diagnosis chart, depending on the sheet used, a undiagnosed region where image diagnosis cannot be performed may be produced. Specifically, as long as the sheet size satisfies a sheet width sufficient to cover the maximum printable width of the printing apparatus, image diagnosis of the entire region can be performed. However, in the case of a sheet size with a smaller sheet width, the outer part of the sheet becomes an undiagnosed region. In such a case, even if a test pattern image is efficiently disposed, an undiagnosed region is produced on the outer part of the sheet width printed on. Thus, there is a possibility of causing a printing abnormality if a print job is performed with a sheet size with a larger sheet width.

### SUMMARY OF THE INVENTION

The present invention relates to a novel mechanism that supports a user in the setting of a sheet to be used in image diagnosis.

The present invention in its first aspect provides an image diagnosis apparatus as specified in claims 1 to 9 and 12.

The present invention in its second aspect provides a method for controlling an image diagnosis apparatus as specified in claims 10 and 13.

The present invention in its third aspect provides an image forming apparatus as specified in claims 11 and 14.

Further features of the present invention will be apparent from the following description of embodiments with reference to the attached drawings.

### BRIEF DESCRIPTION OF THE DRAWINGS

FIG. 1 is an overall view of the hardware configuration of a printing system according to an embodiment.
FIG. 2 is a block diagram of the system configuration of a printing system according to an embodiment.
FIG. 3 is a mechanical cross-sectional view of an image forming apparatus according to an embodiment.
FIG. 4 is a flowchart illustrating a processing flow of setting processing for image diagnosis according to an embodiment.
FIG. 5 is a flowchart illustrating a processing flow of execution processing for image diagnosis according to an embodiment.
FIG. 6 is a diagram illustrating an example of a settings screen for image diagnosis execution according to an embodiment.
FIGS. 7A and 7B are diagrams illustrating an example of a sheet settings screen for image diagnosis according to an embodiment.
FIGS. 8A to 8C are diagrams for describing the relationship between an image diagnosis region and sheet width according to an embodiment.
FIG. 9 is a diagram illustrating an example of a display screen of an image diagnosis execution result according to an embodiment.
FIG. 10 is a diagram illustrating an example of a settings screen relating to a warning display for when setting an image diagnosis sheet according to an embodiment.
**FIG.** 11 is a data list illustrating the relationship between standard sheet sizes and destination information according to an embodiment.
FIG. 12 is a flowchart illustrating a processing flow of sheet setting processing for image diagnosis according to an embodiment.
FIG. 13 is a diagram illustrating an example of a sheet settings screen for image diagnosis according to an embodiment.
FIG. 14 is a flowchart illustrating a processing flow of sheet setting processing for image diagnosis according to an embodiment.
FIG. 15 is a diagram illustrating an example of a sheet settings screen for image diagnosis according to an embodiment.
FIG. 16 is a diagram illustrating an example of a sheet settings screen for image diagnosis according to an embodiment.

### DESCRIPTION OF THE EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted. Each of the embodiments of the present invention described below can be implemented solely or as a combination of a plurality of the embodiments or features thereof where necessary or where the combination of elements or features from individual embodiments in a single embodiment is beneficial.

### First Embodiment

### Overall System Configuration

The first embodiment of the present invention will be described below. An external controller according to the present embodiment may be referred to as an image processing controller, a digital front end, a DFE, a printing server, or the like. An image forming apparatus may be referred to as a multi-function peripheral or an MFP. Hereinafter, image formation for forming an image on a sheet may be referred to as printing.

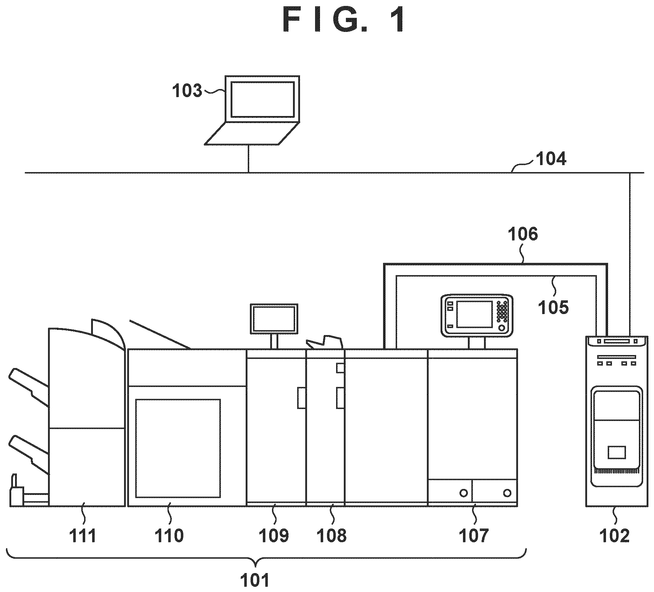

First, FIG. 1 is a diagram illustrating the configuration of an image processing system according to the present embodiment. The present image processing system includes an image forming apparatus 101 and an external controller 102. The image forming apparatus 101 and the external controller 102 are communicatively connected via an internal LAN 105 and a video cable 106. The external controller 102 is communicatively connected to a PC 103 via an external LAN 104, and printing instructions are sent from the PC 103 to the external controller 102.

The PC 103 is installed with a printer driver that converts print data into a print description language that can be processed by the external controller 102. To issue a printing instruction, the user can issue a print instruction from various types of applications via the printer driver. The printer driver transmits print data to the external controller 102 on the basis of the printing instruction from the user. When the external controller 102 receives a printing instruction from the PC 103, the external controller 102 executes data analysis and rasterize processing and supplies the image forming apparatus 101 with print data with a printing instruction. The external controller 102 supplies the image forming apparatus 101 with print data via the internal LAN 105 and supplies rasterized image data via the video cable 106.

Next, the image forming apparatus 101 will be described. The image forming apparatus 101 is connected with an apparatus with various different functions described below and is configured to execute complex printing processing such as binding and the like. The image forming apparatus 101 includes a printing apparatus 107, an inserter 108, an image diagnosis apparatus 109, a large-capacity stacker 110, and a finisher 111.

The printing apparatus 107 forms images using toner on a sheet fed internally from a sheet feeding unit in the lower portion of the printing apparatus 107. Note that sheets are used in this example, but any printing medium other than sheets may also be used. The configuration and operating principle of the printing apparatus 107 will now be described.

A light beam such as a laser light modulated according to image data is reflected at a rotating polygon mirror such as a polygon mirror and emitted at a photosensitive drum as a scanning beam. The electrostatic latent image formed on the photosensitive drum via this laser light is developed via the toner, and a toner image is transferred onto the sheet attached to a transfer drum. The sequence of image forming processes are successively executed for the yellow (Y), magenta (M), cyan (C), and black (K) toner to form a full color image on the sheet. The sheet on the transfer drum where the full color image is formed is conveyed to a fixing device. The fixing device includes a roller, a belt, and the like and includes a heat source such as a halogen heater in the roller. The toner on the sheet where the toner image is transferred on is melted by heat and pressure to fix the toner to the sheet.

The inserter 108 is an apparatus for inserting insert sheets. The inserter 108 can insert sheets at any position in a sheet group conveyed after printing at the printing apparatus 107.

The image diagnosis apparatus 109 can execute image diagnosis. Image diagnosis is determining whether there is an image abnormality on a printed sheet by reading an image on a conveyed sheet and comparing the generated image data and a pre-registered reference image. The details will be described below. In a case where an image abnormality is determined, the abnormality is analyzed, and the cause of the abnormality in the image forming apparatus and a handling method to remove the cause are identified. Note that in the present embodiment described herein, the printing apparatus 107 and the image diagnosis apparatus 109 are included in another separate apparatus. However, the present invention is not limited thereto, and these may all be integrally formed in one apparatus (for example, an image forming apparatus).

The large-capacity stacker 110 is an apparatus where a large volume of sheets can be stacked. The finisher 111 is an apparatus adding a finishing process (post-processing) to the conveyed sheet. Depending on the settings, a finishing process such as stapling, punching, and saddle stitch binding can be executed, and the sheets that pass through the finisher 111 are discharged to a discharge tray.

In the printing system described using FIG. 1, the external controller 102 is connected to the image forming apparatus 101. However, the present invention is not limited to a configuration in which the external controller 102 is connected. In other words, in another configuration, the image forming apparatus 101 may be connected to the external LAN 104, and data that can be processed by the image forming apparatus 101 may be transmitted from the PC 103. In this case, in the image forming apparatus 101, data analysis and rasterize processing are executed and printing processing is executed.

### System Control Configuration

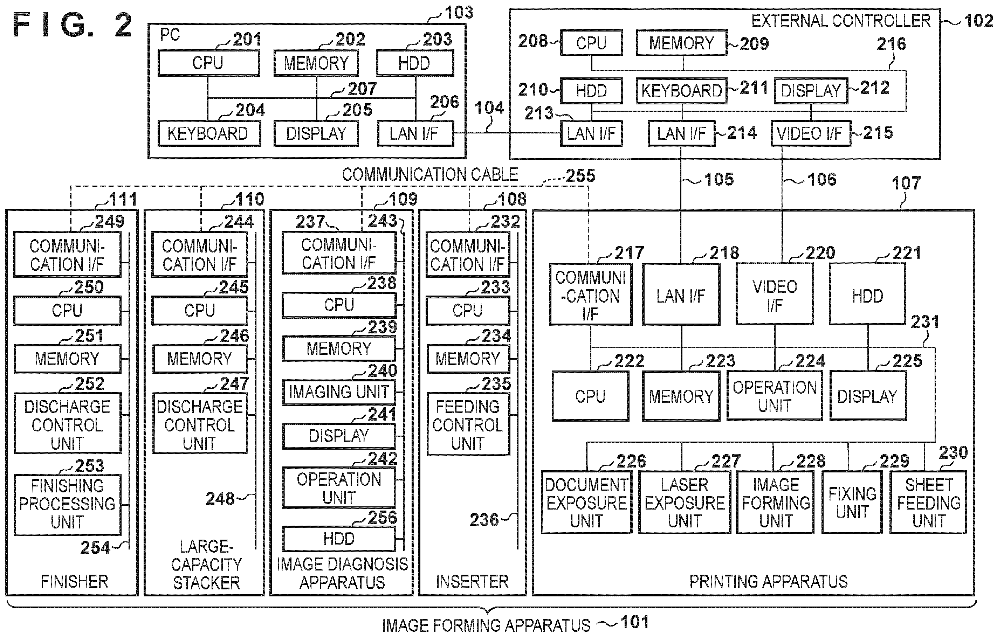

Next, the system control configuration of the image forming apparatus 101, the external controller 102, and the PC 103 according to the present embodiment will be described with reference to FIG. 2. First, the configuration of the printing apparatus 107 will be described.

The printing apparatus 107 includes a communication I/F 217, a LAN I/F 218, a video I/F 220, an HDD 221, a CPU 222, a memory 223, an operation unit 224, and a display 225. The printing apparatus 107 also includes a document exposure unit 226, a laser exposure unit 227, an image forming unit 228, a fixing unit 229, and a sheet feeding unit 230. Each of the components are connected via a system bus 231.

The communication I/F 217 is connected to the inserter 108, the image diagnosis apparatus 109, the large-capacity stacker 110, and the finisher 111 via a communication cable 255 and performs communication to control the apparatuses. The LAN I/F 218 is connected to the external controller 102 via the internal LAN 105 and exchanges print data and the like. The video I/F 220 is connected to the external controller 102 via the video cable 106 and exchanges rasterized image data and the like.

The HDD 221 is a storage apparatus for storing programs and data. The CPU 222 loads programs stored in the HDD 221 onto the memory 223 and executes the program to comprehensively control the image processing and printing. The memory 223 stores programs and image data required when the CPU 222 executes the various types of processing and operates as a working area. The operation unit 224 receives input of various types of settings and operation instructions from the user. The display 225 displays settings information of the image forming apparatus 101, the processing status of print jobs (image forming jobs), and the like.

The document exposure unit 226 executes reading processing of documents when the copy function or scan function is used. Document data is read by capturing an image of a sheet placed by the user using a CCD camera while illuminating the sheet with light from an exposure lamp. The laser exposure unit 227 is an apparatus that performs primary charging and laser exposure for emitting laser light at a photosensitive drum to transfer a toner image. In the laser exposure unit 227, first, primary charging is performed to charge the photosensitive drum surface to a uniform negative potential. Next, laser light from a laser driver is emitted at the photosensitive drum while adjusting the angle of reflection of the polygon mirror. In this manner, the negative charge of the irradiated portion is neutralized, and an electrostatic latent image is formed. The image forming unit 228 is an apparatus for transferring toner to the sheet. The image forming unit 228 includes a developing unit, a transfer unit, a toner supply unit, and the like and transfers toner on the photosensitive drum to the sheet.

In the developing unit, the negative-charged toner from the developing cylinder is adhered to the electrostatic latent image on the photosensitive drum surface to form a visible image. In the transfer unit, a primary transfer in which a positive potential is applied to a primary transfer roller and toner on the photosensitive drum surface is transferred to the transfer belt and a secondary transfer in which a positive potential is applied to a secondary transfer outer roller and toner on the transfer belt is transferred to the sheet. The fixing unit 229 is an apparatus for melting and fixing the toner on the sheet to the sheet via heat and pressure. The fixing unit 229 includes a heater, a fixing belt, a pressure belt. The sheet feeding unit 230 is an apparatus for feeding sheets and controls sheet feeding operations and conveying operations via rollers and various types of sensors. In the example described herein, the image forming unit is an electrophotographic type that uses toner, but the printing method is not limited thereto. Another method such as an inkjet method that uses ink may be used.

Next, the configuration of the inserter 108 will be described. The inserter 108 includes a communication I/F 232, a CPU 233, a memory 234, and a feeding control unit 235, and these components are connected via a system bus 236. The communication I/F 232 is connected to the printing apparatus 107 via the communication cable 255 and performs communications necessary for control.

The CPU 233 performs various types of control necessary for sheet feeding in accordance with a control program stored in the memory 234. The memory 234 is a storage apparatus where the control program is stored. The feeding control unit 235, on the basis of an instruction from the CPU 233, controls the rollers and the sensors while controlling feeding and conveying of sheets conveyed from the sheet feeding unit of the inserter or the printing apparatus 107.

Next, the configuration of the image diagnosis apparatus 109 will be described. The image diagnosis apparatus 109 includes a communication I/F 237, a CPU 238, a memory 239, an imaging unit 240, a display unit 241, an operation unit 242, and an HDD 256, and these components are connected via a system bus 243. The communication I/F 237 is connected to the printing apparatus 107 via the communication cable 255 and performs communications necessary for control. Also, the reference image used in inspection is also received from the printing apparatus 107 via the communication cable 255 and the communication I/F 237 and stored in the HDD 256.

The CPU 238 is an example of a control unit or a display control unit and performs various types of control necessary for inspection in accordance with the control program stored in the memory 239. The memory 239 is a storage apparatus where the control program is stored. The receiving and storing of the reference image is not limited thereto, and in another configuration for example, the image diagnosis apparatus 109 includes a LAN I/F and communicates with the external controller 102 via an internal LAN. In this case, the image diagnosis apparatus 109 can perform similar operations by receiving the reference image from the external controller 102 via the LAN I/F and storing the reference image in the HDD 256.

The imaging unit 240 captures an image of the conveyed sheet on the basis of an instruction by the CPU 238. The CPU 238 compares the image captured by the imaging unit 240 and the reference image stored in the HDD 256 and determines if there is an image abnormality in the printed sheet. The display unit 241 displays image diagnosis results, settings screen, and the like. The operation unit 242 is operated by the user and receives instructions to change the settings of the image diagnosis apparatus 109, register the reference image, and the like. The HDD 256 stores the reference image. Note that in a case where the HDD 256 is not provided, the reference image may be stored in the HDD 221 of the printing apparatus 107, and the reference image may be read out from the HDD 221 to the memory 239 and used when determining whether there is an image abnormality in the printed sheet.

Next, the configuration of the large-capacity stacker 110 will be described. The large-capacity stacker 110 includes a communication I/F 244, a CPU 245, a memory 246, and a discharge control unit 247, and these components are connected via a system bus 248. The communication I/F 244 is connected to the printing apparatus 107 via the communication cable 255 and performs communications necessary for control.

The CPU 245 performs various types of control necessary for sheet discharge in accordance with a control program stored in the memory 246. The memory 246 is a storage apparatus where the control program is stored. The discharge control unit 247 performs control to convey the conveyed sheet to the stack tray, the escape tray, of the subsequent finisher 111 on the basis of an instruction from the CPU 245.

Next, the configuration of the finisher 111 will be described. The finisher 111 includes a communication I/F 249, a CPU 250, a memory 251, a discharge control unit 252, and a finishing processing unit 253. Each of the components are connected via a system bus 254. The communication I/F 249 is connected to the printing apparatus 107 via the communication cable 255 and performs communications necessary for control.

The CPU 250 performs various types of control necessary for finishing and sheet discharge in accordance with a control program stored in the memory 251. The memory 251 is a storage apparatus where the control program is stored. The discharge control unit 252 controls conveying and discharge of the sheet on the basis of an instruction from the CPU 250. The finishing processing unit 253 controls the finishing processes such as stapling, punching, saddle stitch binding, and the like on the basis of an instruction from the CPU 250.

Next, the configuration of the external controller 102 will be described. The external controller 102 includes a CPU 208, a memory 209, an HDD 210, a keyboard 211, a display 212, a LAN I/F 213, a LAN I/F 214, and a video I/F 215, and each of the components are connected via a system bus 216.

The CPU 208 executes processing such as receiving print data from the PC 103, Raster Image Processor (RIP) processing, transmitting print jobs to the image forming apparatus 101, and the like on the basis of a program or data stored in the HDD 210. The memory 209 stores programs and data required when the CPU 208 executes the various types of processing and operates as a working area. The HDD 210 stores programs and data required for operations such as printing processing. The keyboard 211 is an apparatus for inputting operation instructions of the external controller 102. The display 212 displays information such as executed applications of the external controller 102 and the like via still images or moving images image signals.

The LAN I/F 213 is connected to the PC 103 via the external LAN 104 and performs communication of printing instructions and the like. The LAN I/F 214 is connected to the image forming apparatus 101 via the internal LAN 105 and performs communication of print jobs as printing instructions and the like. The video I/F 215 is connected to the image forming apparatus 101 via the video cable 106 and performs communication of rasterized image data and the like.

Next, the configuration of the PC 103 will be described. The PC 103 includes a CPU 201, a memory 202, an HDD 203, a keyboard 204, a display 205, and a LAN I/F 206, and each of the components are connected via a system bus 207. The CPU 201 executes print data generation and printing instructions on the basis of a document processing program and the like stored in the HDD 203.

Also, the CPU 201 controls each device connected to the system bus. The memory 202 stores programs and data required when the CPU 201 executes the various types of processing and operates as a working area. The HDD 203 stores programs and data required for operations such as printing processing. The keyboard 204 is an apparatus for inputting operation instructions of the PC 103. The display 205 displays information such as executed applications of the PC 103 and the like using still images, or moving images, via image signals. The LAN I/F 206 is connected to the external LAN 104 and performs communication of printing instructions and the like.

As described above, the external controller 102 and the image forming apparatus 101 are connected via the internal LAN 105 and the video cable 106. However, as long as data required for printing can be exchanged, a connection configuration using only a video cable may be used. Also, it is sufficient that the memory 202, 209, 223, 234, 239, 246, and 251 are each a storage apparatus for holding data and programs. For example, alternative configurations may use a volatile RAM, a non-volatile ROM, a built-in HDD, an external HDD, a USB memory, or the like.

### Hardware Configuration of Image Forming Apparatus

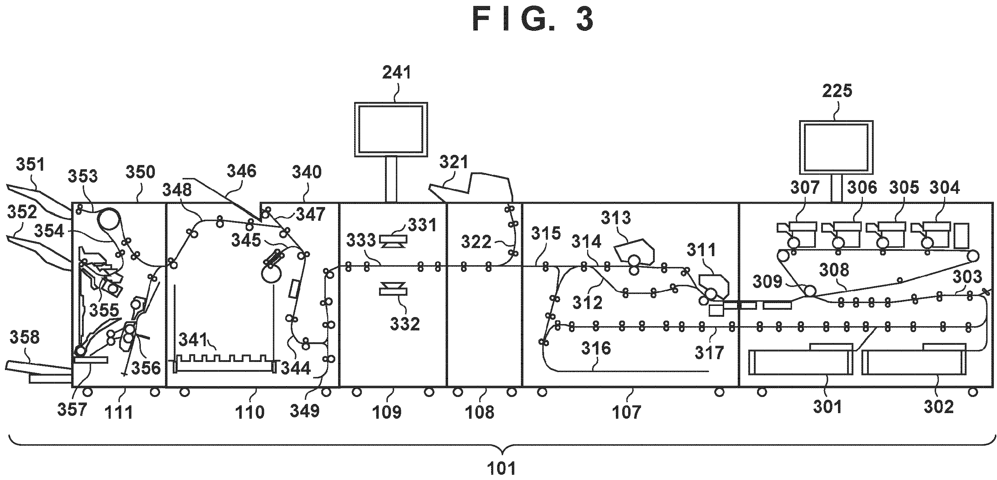

Next, the hardware configuration of the image forming apparatus 101 will be described with reference to FIG. 3. First, the printing apparatus 107 will be described. Feeding decks 301 and 302 included in the printing apparatus 107 can house various types of sheets. The information (sheet size and sheet type) of the sheets stored in each feeding deck can be set from the operation unit 224 of the printing apparatus 107. In the present embodiment described herein, the two feeding decks 301 and 302 are provided. However, in another configuration, a plurality of feeding decks may be further provided by connecting a feeding deck apparatus (not illustrated). At each feeding deck, only the single highest housed sheet can be separated from the other sheets and feed to a sheet conveyance path 303.

Development stations 304 to 307 form a toner image to form a color image by using Y, M, C, and K colored toner. Here, the formed toner image is primary-transferred to an intermediate transfer belt 308. Then, the intermediate transfer belt 308 rotates in the clockwise direction in the diagram, and the toner image primary-transferred on the intermediate transfer belt 308 is transferred to a sheet conveyed from the sheet conveyance path 303 at a secondary transfer position 309.

The display 225 displays the print status of the image forming apparatus 101 and information for settings. A fixing unit 311 fixes the toner image to the sheet. The fixing unit 311 includes a pressing roller and a heating roller and, when the sheet passes between the rollers, fixes the toner image to the sheet via melting and compression bonding of the toner. The sheet after leaving the fixing unit 311 is conveyed to a sheet conveyance path 315 via a sheet conveyance path 312. In a case where further melting and compression bonding is required for fixing according to the type of the sheet, after the sheet has passed the fixing unit 311, the sheet is conveyed to a second fixing unit 313 using an upper sheet conveyance path. In the second fixing unit 313, after additional melting and compression bonding is performed, the sheet is conveyed to the sheet conveyance path 315 via a sheet conveyance path 314. In a case where the image forming mode is double-sided, the sheet is conveyed to a sheet inverting path 316 and inverted at the sheet inverting path 316 before being conveyed to a double-sided conveyance path 317 and being subjected to image transfer of the second surface at the secondary transfer position 309.

Next, the inserter 108 for inserting sheets will be described. The inserter 108 includes an inserter tray 321 and makes a sheet fed to the inserter tray 321 via a sheet conveyance path 322 merge into the conveyance path. Accordingly, a sheet can be inserted at any position into a sequence of sheets conveyed from the printing apparatus 107 and conveyed to the subsequent apparatus. Sheets having passed the inserter 108 are conveyed to the image diagnosis apparatus 109.

Next, the image diagnosis apparatus 109 will be described. In the image diagnosis apparatus 109, cameras 331 and 332 are disposed opposite one another. The camera 331 is for reading the top surface of the sheet, and the camera 332 is for reading the bottom surface of the sheet. The image diagnosis apparatus 109 uses the camera 331 and the camera 332 to read an image of the sheet at the time when the sheet, having sequentially been conveyed from the printing apparatus 107, reaches a predetermined position on a sheet conveyance path 333. The image diagnosis processing includes determining whether there is an image abnormality and, in the case of an image abnormality, identifying if it is an apparatus abnormality and identifying the cause and handling method. The display unit 241 displays the results of the image diagnosis performed by the image diagnosis apparatus 109 and the like. Note that the cameras 331 and 332 may be provided in an apparatus other than the image diagnosis apparatus 109. In such a case, the image diagnosis apparatus 109 obtains a read image from the apparatus provided with the cameras 331 and 332 and performs an inspection function and an image diagnosis function.

Next, the large-capacity stacker 110 will be described. The large-capacity stacker 110 is a large-capacity stacker where a large volume of sheets can be stacked. The large-capacity stacker 110 includes a stack tray 341 as a tray where sheets determined to have no quality abnormality by the image diagnosis of the image diagnosis apparatus 109 are stacked. After passing through the image diagnosis apparatus 109, the sheets are input to the large-capacity stacker 110 via a sheet conveyance path 344 and stacked. The sheet is conveyed from the sheet conveyance path 344 and stacked in the stack tray 341 via a sheet conveyance path 345.

Also, the stacker 110 includes an escape tray 346 as a discharge tray. The escape tray 346 is a tray where sheets determined to have a quality abnormality by the image diagnosis of the image diagnosis apparatus 109 are discharged. In a case where a sheet is to be output to the escape tray 346, the sheet is conveyed from the sheet conveyance path 344 to the escape tray 346 via a sheet conveyance path 347. Note that in the case of conveying the sheet to a post-processing apparatus of a later stage of the large-capacity stacker 110, the sheet is conveyed via a sheet conveyance path 348. An inverting unit 349 inverts sheets. The inverting unit 349 is used when a sheet is stacked on the stack tray 341. The inverting unit 349 inverts the sheet once when the sheet is stacked on the stack tray 341 so that the orientation of the sheet when input and the orientation of the sheet when output are the same. In a case where the sheet is to be conveyed to the escape tray 346 or a subsequent post-processing apparatus, the inverting operation at the inverting unit 349 is not performed so that the sheet is discharged without being flipped when stacked.

Next, the finisher 111 will be described. The finisher 111 is an apparatus for adding a finishing process to the conveyed sheet in accordance with a function designated by the user. Specifically, the finisher 111 has a finishing function including stapling (one or two section binding), punching (2 or 3 holes), saddle stitch binding, and the like. The finisher 111 includes a discharge tray 351 and a discharge tray 352. The sheet is output to the discharge tray 351 via a sheet conveyance path 353. However, with the sheet conveyance path 353, a finishing process such as stapling cannot be performed. In the case of performing a finishing process such as stapling, the finishing function designated by the user is performed at a processing unit 355 via a sheet conveyance path 354 and output to the discharge tray 352.

The discharge trays 351 and 352 can be raised and lowered, and the discharge tray 351 can be operated to be lowered so that the sheet after being subjected to a finishing process at the processing unit 355 is stacked on the discharge tray 351. In a case where saddle stitch binding is designated, after a stapling process is performed in the center of the sheet at a saddle stitch binding processing unit 356, the sheet is folded in half and output to a saddle stitch binding tray 358 via a sheet conveyance path 357. The saddle stitch binding tray 358 has a belt conveyor configuration, and a saddle stitch bound bundle stacked on the saddle stitch binding tray 358 is conveyed to the left side.

### Image Diagnosis Setting Processing

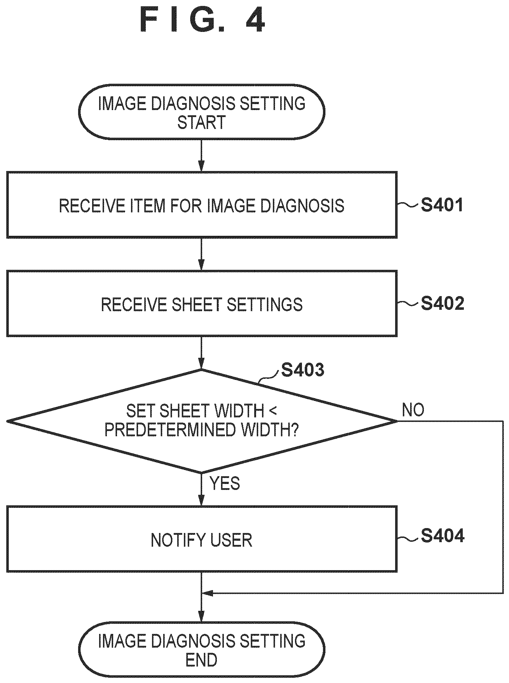

The processing process of image diagnosis setting processing executed by the image diagnosis apparatus 109 according to the present embodiment will now be described with reference to FIG. 4. The processing described below is implemented by the CPU 238 of the image diagnosis apparatus 109, for example, loading a control program stored in the HDD 256 on the memory 239 and executing the control program. The present flowchart is started by the user invoking a diagnosis settings screen 600 described below for starting the image diagnosis settings on the display unit 241 via the operation unit 242.

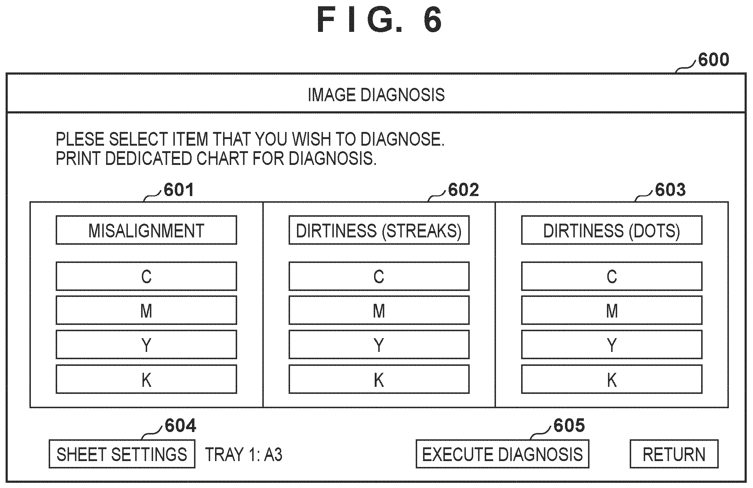

In step S401, the CPU 238 receives an item for performing image diagnosis via a user operation on the diagnosis settings screen 600. An example of the diagnosis settings screen will now be described using FIG. 6. FIG. 6 illustrates an example of the diagnosis settings screen 600 for receiving image diagnosis settings and execute instructions. In the present embodiment described herein, the diagnosis settings screen 600 is displayed on the display unit 241 of the image diagnosis apparatus 109. However, the diagnosis settings screen 600 may be displayed on the display 225 of the printing apparatus 107 or the display 212 of the external controller 102. The diagnosis settings screen 600 includes target items 601 to 603 for performing image diagnosis, a sheet settings button 604, and an execute diagnosis button 605. The diagnosis settings screen 600 is displayed on the basis of an instruction by the user from the operation screen at any timing such as before execution of a print job.

The target items 601 to 603 are display regions for designating target causes for executing image diagnosis. The target item 601 is for misalignment, the target item 602 is for marks (streaks), and the target item 603 is for marks (dots), and whether or not to execute image diagnosis for these can be set. Whether or not to execute diagnosis can be set per item. In this example, diagnose is set by operating the item button, and a second operation cancels the selected state. When diagnose is set for a target item for image diagnosis, the target color to diagnose can also be set. Detailed settings include being able to individually set the color to be used in image formation. In this example, the toner colors Y, M, C, and K can be individually set. Each toner color is selected by one operation and a second operation cancels the selected state.

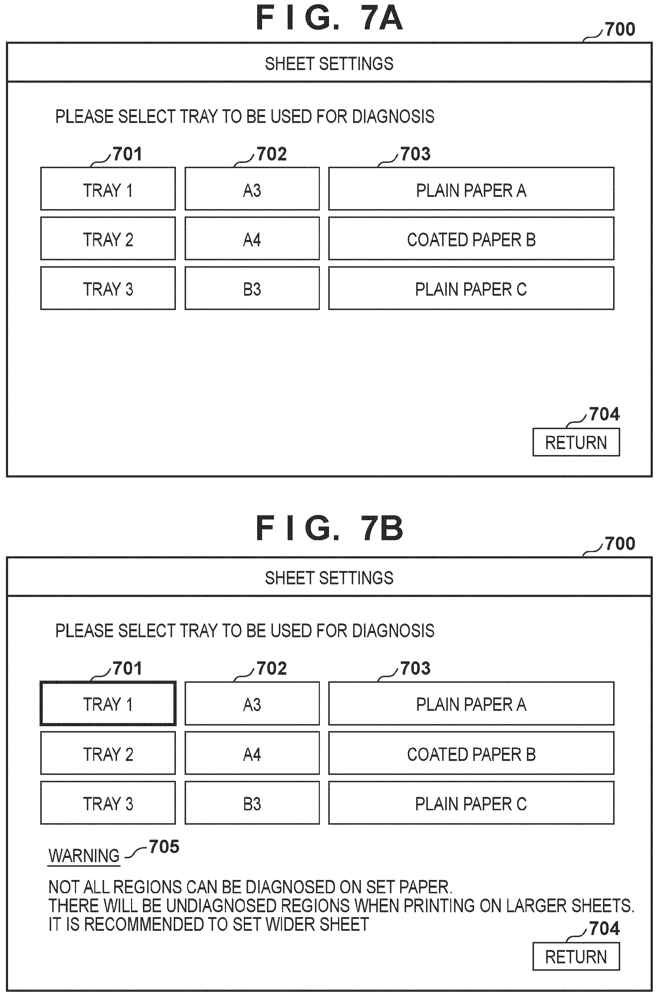

When the sheet settings button 604 is operated, the screen transitions to a sheet settings screen 700 described below using FIGS. 7A and 7B, and a selection of the sheet to use in image diagnosis is received. FIG. 6 illustrates an example in which information of the feed tray and size is displayed next to the sheet settings button 604 as set sheet information. The displayed information is not limited to this, and information such as the name and type of sheet may be displayed. When the execute diagnosis button 605 is operated, an instruction is sent to execute the image diagnosis item set in 601 to 603 using the sheet set in 604.

An example of the sheet settings screen will now be described using FIG. 7A. FIG. 7B illustrates an example of the sheet settings screen 700 for setting the sheet to be used in image diagnosis according to the present embodiment. In the present embodiment, the sheet settings screen 700 is displayed on the display unit 241 of the image diagnosis apparatus 109. However, the sheet settings screen 700 may be displayed on the display 225 of the printing apparatus 107 or the display 212 of the external controller 102. The sheet settings screen 700 is displayed when the sheet settings button 604 of the diagnosis settings screen 600 is operated by a user.

701 denotes a list of feed trays provided in the image forming apparatus 101. In this example, a configuration including three feed trays is used. 702 and 703 denote information of sheets currently set in the feed trays. The feed tray information and set sheet information of the image forming apparatus 101 are held in the memory 223 of the printing apparatus 107, and the CPU 238 of the image diagnosis apparatus 109 queries the CPU 222, obtains the sheet information, and holds the sheet information in the memory 239. The CPU 238 reads out this information and displays the information in each display region of the sheet settings screen 700. 704 denotes a return button for confirming the current settings and ending the settings. When any tray set with sheets to use in printing is selected by a user operation and the return button 704 is pressed, the screen returns to the diagnosis settings screen 600. Now we will return to the description of FIG. 4. After the image diagnosis items 601 to 603 described above are selected, in step S402, the CPU 238 receives the sheet settings for the diagnosis chart to be printed for image diagnosis. In step S402, when one item from the feed tray list 701 is selected by the user, in step S403, the CPU 238 compares the selected sheet information with a predetermined width and performs a determination. In the present embodiment, the predetermined width is the maximum width printable by the image forming apparatus 101, or in other words, the maximum forming width by the image forming apparatus 101. The maximum width printable by the image forming apparatus 101 is the sheet width corresponding to the maximum forming width of the image forming unit and is dependent on the hardware configuration. It also corresponds to a stable printable width for toner image formed at the development stations 304 to 307 and transferred at the secondary transfer position 309 from the intermediate transfer belt 308 onto a sheet conveyed from the sheet conveyance path 303. The printable maximum width differs depending on the product, but the manufacturing and distributing company of the image forming apparatus 101 will often establish this as a specification.

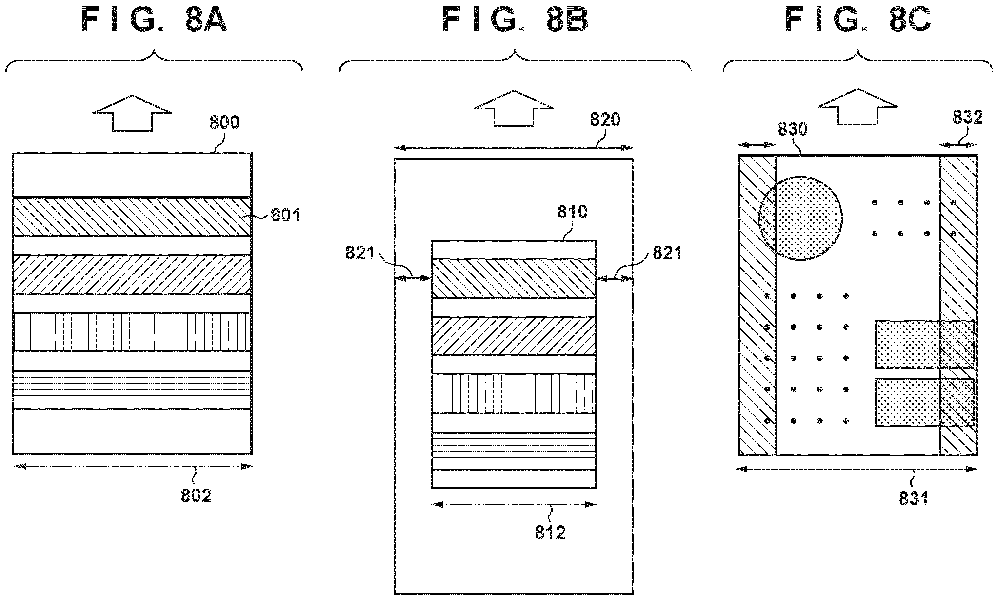

The relationship between a chart for image diagnosis, the sheet width, and the maximum width printable by the image forming apparatus 101 according to the present embodiment will now be described with reference to FIGS. 8A to 8C. FIG. 8A illustrates an example of an image diagnosis chart. FIG. 8B is a diagram representing a state in which a toner image has been printed on a sheet conveyed from the sheet conveyance path 303 at the secondary transfer position 309. 820 denotes the maximum width printable by the image forming apparatus 101.

800 and 810 denote the sheet of the diagnosis chart printed with a pattern image for image diagnosis. As illustrated by the arrows, the upward direction in the diagram is the conveyance direction. 801 and 821 denote examples of pattern images used in image diagnosis. Here, a number of pattern images corresponding to the number of toner types having constant density regions are disposed side by side in the main scan direction for detection of marks (streaks) of the image diagnosis item 602 and in particular vertical streaks. However, the layout of the diagnosis chart is not limited thereto, and the pattern images that enable image diagnosis can be freely disposed in accordance with the image diagnosis item. 802 and 812 denote the sheet width of the diagnosis chart. By printing the test pattern image 801 all the way to the sheet width, image diagnosis can be performed on the entire sheet width region.

However, as illustrated in FIG. 8B, in a case where the sheet width 812 of the diagnosis chart 810 is less than the printable maximum width 820, to the left and right of the sheet width 810, an undiagnosed region 821 where the pattern image for image diagnosis cannot be printed is produced. For example, in a case where the printable maximum width 820 of the image forming apparatus 101 is 364 mm, that corresponds to B3 size width. If an A3-sized sheet with a size width of 297 mm is used in image diagnosis, the insufficient width corresponds to 364 - 297 = 67 mm. Thus, in a case where the sheet conveying reference position is in the center, the undiagnosed regions 821 on the left and right sides are 33.5 mm wide.

This will be further described in detail using FIG. 8C. 830 denotes a page of a print job of the user. In this example, after image diagnosis is performed on the A3-sized sheet 810, a printing print job is executed using the B3-sized sheet 830. As described above, image diagnosis can only be executed for an A3-sized sheet width. Thus, an undiagnosed region 832 is produced on the left and right side of the print target region on the printed page 830 with a B3-sized sheet width 831.

When an undiagnosed region is produced in a printed page, it means that a quality check via image diagnosis has not been performed in that region or there is a possibility of an image abnormality. However, for a user who has performed an image diagnosis in advance and been made aware that OK has been determined, it is difficult to perceive the existence of an undiagnosed region dependent on the sheet width used when performing image diagnosis and the possibility of an image abnormality. Thus, the present embodiment has an advantage in that, in a case where there is an undiagnosed region, the user is made aware of this via a notification.

Now we will return to the description of FIG. 4. As described above, in step S403, the set sheet width and the predetermined width, that is, the printable maximum width, are compared and determination is performed. Note that in this example, the predetermined width is set as the printable maximum width, but the present invention is not limited thereto. For example, the predetermined width may be a recommended width for the apparatus or a width set by an administrator or the like instead of being the printable maximum width. When the set sheet width is determined to be smaller in the determination (YES in step S403), the processing proceeds to step S404. Otherwise, the processing of the present flowchart ends. In step S404, the CPU 238 notifies the user of the existence of an undiagnosed region via a warning and ends the processing of the present flowchart. In this manner, according to the present embodiment, by displaying a warning at the time when the sheet is selected, the user is made aware of the possibility of the existence of an undiagnosed region and is supported in setting a sheet to use in the image diagnosis. In the present embodiment, a mode of displaying the warning is described, but the present invention is not limited thereto. In other examples, information relating to a recommended sheet or information relating to a more suitable sheet may be communicated. Other modes will be described in other embodiments.

FIG. 7B illustrates an example of a notification method for a warning according to the present embodiment. A warning according to the present embodiment is implemented as a part of the sequence of sheet setting operations in the sheet settings screen 700. When the CPU 238 compares the sheet width in step S403 on the basis of the feed tray set with the sheet being selected in step S402 and determines that the sheet width is smaller than the predetermined width, the CPU 238 generates warning text 705 informing the user of this and displays the warning text 705 on the screen 700. The displayed warning text 705 here is an example, but it is preferable that the user is made aware of contents including the existence of an undiagnosed region in the sheet and a recommendation to use a sheet with a greater width.

### Image Diagnosis Processing

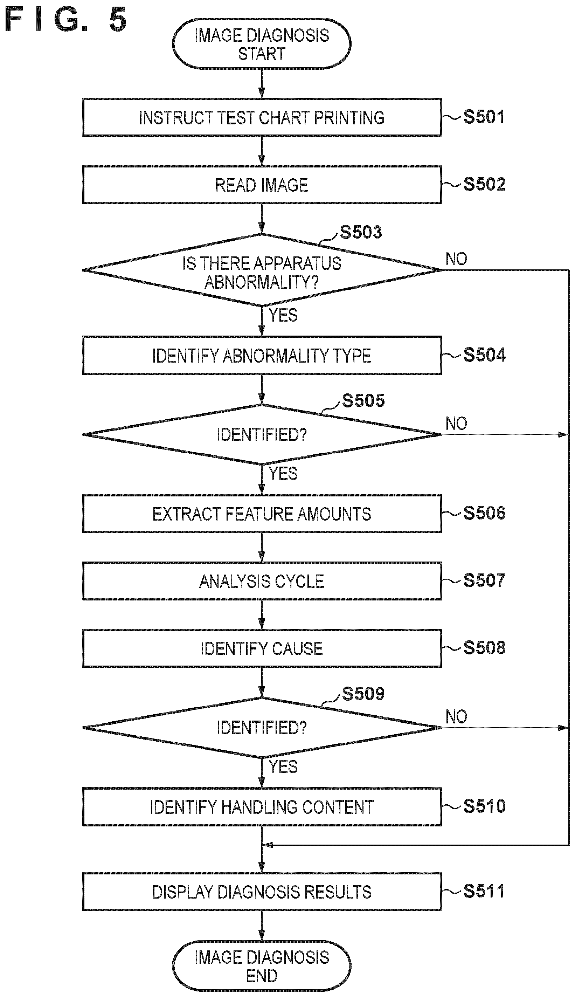

The processing process of image diagnosis processing according to the present embodiment will now be described with reference to FIG. 5. The processing described below is implemented by the CPU 238 of the image diagnosis apparatus 109, for example, loading a control program stored in the HDD 256 on the memory 239 and executing the control program. The present flowchart starts when the image diagnosis setting processing described using FIG. 4 is complete and the execute diagnosis button 605 of the diagnosis settings screen 600 is operated.

In step S501, the CPU 238 issues a test chart printing instruction to the printing apparatus 107. Next, in step S502, the CPU 238 issues an instruction for the imaging unit 240 to read an image at the timing when the conveyed test chart image is conveyed. Also, when the CPU 238 stores the read scanned image data in the memory 239, the processing proceeds to step S503. In step S503, the CPU 238 determines whether or not there is an apparatus abnormality in the scanned image data obtained in step S502. In a case where an apparatus abnormality is searched for and it is determined that there is an apparatus abnormality, the processing proceeds to step S504. In a case where it is determined that there is no apparatus abnormality, the processing proceeds to step S511.

In step S504, the CPU 238 identifies the type of the apparatus abnormality. The method for identifying the type of the apparatus abnormality may include searching for each feature of the apparatus abnormality in the scanned image data. Alternatively, the method may include comparing the image data of the test chart document stored in the HDD 256 of the image diagnosis apparatus 109 and the scanned image data obtained in step S502. The CPU 238 stores whether or not there is an identified apparatus abnormality for each abnormality type in the memory 239. There may also be cases where an abnormality is detected but the type cannot be identified. In a case where the abnormality type cannot be identified, the CPU 238 stores this in the memory 239. When this processing is complete, the processing proceeds to step S505.

In step S505, the CPU 238 determines whether or not an abnormality type has been identified in step S504. In a case where it is identified, the processing proceeds to step S506. In a case where it is not identified, the processing proceeds to step S511. In step S506, the CPU 238 extracts a feature amount set for each type of identified apparatus abnormality. Here, in a case where the type of apparatus abnormality is a vertical streak, feature amount may be various types of parameters such as streak position, streak width, number of streaks, streak cycle, and the like. When the CPU 238 stores the extracted feature amount in the memory 239, the processing proceeds to step S507.

In step S507, the CPU 238 analyzes the apparatus abnormality cycle from the apparatus abnormality type identified in step S504 and the feature amount extracted in step S506. For example, in a case where the apparatus abnormality type is a vertical streak, the streak occurrence cycle is analyzed by comparing the position and number of streaks with the cycle width information of each roller of the development stations 304 to 307 or the fixing unit 311 stored in the HDD 256 in advance. When the CPU 238 stores the analyzed cycle in the memory 239, the processing proceeds to step S508.

In step S508, the CPU 238 identifies the apparatus abnormality cause on the basis of the apparatus abnormality type identified in step S504, the feature amount extracted in step S506, and the cycle analyzed in step S507. The apparatus abnormality cause is identified by storing an apparatus abnormality feature amount and a corresponding cause table and looking up the feature amount extracted in step S506. When the CPU 238 identifies the cause of the apparatus abnormality, the cause is stored in the memory 239. There may also be cases where a cause cannot be identified. In a case where the CPU 238 cannot identify it, the CPU 238 stores this in the memory 239. When this processing is complete, the processing proceeds to step S509.

In step S509, the CPU 238 determines whether or not a cause has been identified in step S508. In a case where it is identified, the processing proceeds to step S510. In a case where it is not identified, the processing proceeds to step S511. In step S510, the CPU 238 determines a handling method for the cause identified and stored in step S508. The handling method is determined by storing a table in which causes and corresponding handling methods are stored and looking up the cause identified in step S508. An example of the handling method includes executing an image adjustment function, replacing parts, and cleaning components. When the CPU 238 determines the handling method, the handling method is stored in the memory 239. There may also be cases where a handling method cannot be identified. In a case where the CPU 238 cannot identify it, the CPU 238 stores this in the memory 239. When this processing is complete, the processing proceeds to step S511.

In step S511, the CPU 238 displays information of the image diagnosis executed in steps S501 to S510 on the display unit 241 as image diagnosis results. Note that when a close button 904 of a result screen 900 of the image diagnosis described below is operated, the CPU 238 ends the processing of the present flowchart. Via the processing described above, the image diagnosis apparatus 109 can determine whether or not there is an apparatus abnormality from the sheet printed by the printing apparatus 107, identify the type, cause, and handling method of the apparatus abnormality in a case where there is one, and provide the user with the results.

### Result Screen

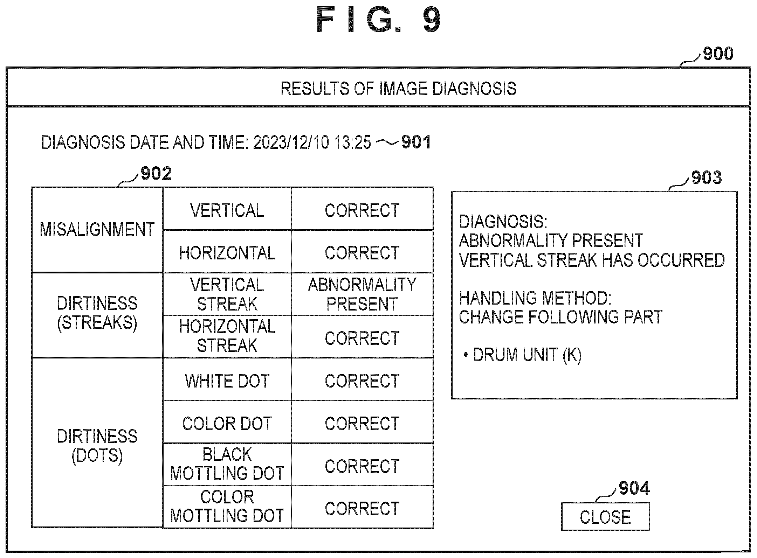

An example of the result screen 900 of image diagnosis according to the present embodiment will now be described with reference to FIG. 9. In the present embodiment, the result screen 900 of image diagnosis is displayed on the display unit 241 of the image diagnosis apparatus 109. However, the result screen 900 may be displayed on the display 225 of the printing apparatus 107 or the display 212 of the external controller 102. The present screen is displayed as image diagnosis result information in step S511 described above. The result screen 900 for image diagnosis includes diagnosis date and time information 901, diagnosis result list 902, diagnosis result detailed information 903, and the close button 904.

The date and time information 901 indicates information of the date and time that the chart image diagnosis was executed and the results confirmed. The diagnosis result list 902 indicates a list of the results of the executed image diagnosis. Here, all items of executed diagnosis, the content, and the diagnosis result are displayed. However, the display content is not limited thereto, and only detected abnormality items may be displayed, for example. The detailed information 903 indicates the detailed diagnosis results obtained in steps S501 to S510.

As described above, the image diagnosis apparatus according to the present embodiment reads, via the reading unit (the cameras 331 and 332), a sheet with a formed image conveyed from the image forming unit (the printing apparatus 107) and detects an abnormality in the read image to diagnose an apparatus abnormality. Also, the present image diagnosis apparatus performs settings relating to image diagnosis according to a user operation and, when settings are performed for the sheet to use in image diagnosis, supports the user in setting a more suitable sheet as the sheet to use in image diagnosis. Specifically, according to the present embodiment, in the sheet setting processing for executing image diagnosis, the sheet width of the selected sheet size and the maximum width printable by the image forming apparatus are compared. In a case where the set sheet width is smaller, the user is notified of this. Accordingly, the user can easily comprehend that, due to dependency on the sheet size for executing image diagnosis, in the case of executing a print job using a sheet that is too big, an undiagnosed region is produced and can be made aware of the possibility of an image abnormality. In this manner, according to the present embodiment, a novel mechanism is provided for supporting a user in the setting of a sheet to be used in image diagnosis, and instances of executing image diagnosis with undiagnosed regions can be reduced. Also, according to the present embodiment, the user can be appropriately notified of undiagnosed regions when image diagnosis is executed.

### Second Embodiment

The second embodiment of the present invention will be described below. In the first embodiment, the predetermined width and the maximum width printable by the image forming apparatus 101 (maximum forming width by the image forming apparatus 101) are the targets of comparison in determining an undiagnosed region in image diagnosis. By comparing the printable maximum width, if a sheet smaller than the maximum width is set in image diagnosis, the warning text 705 is always displayed. While this allows for the user to be made acutely aware, depending on the printing operation environment of the user, plausibly, there may be cases in which the type and size of the sheet to be used is essentially set and a sheet of a size with the printable maximum width cannot be used. For such a user, having a warning displayed every time may actually cause annoyance. In regards to this, in the present embodiment, a method will be described for controlling the frequency of notifications to the user by changing the predetermined width, which is the comparison target for determining undiagnosed regions, depending on the printing operation environment of the user.

### Warning Settings Screen

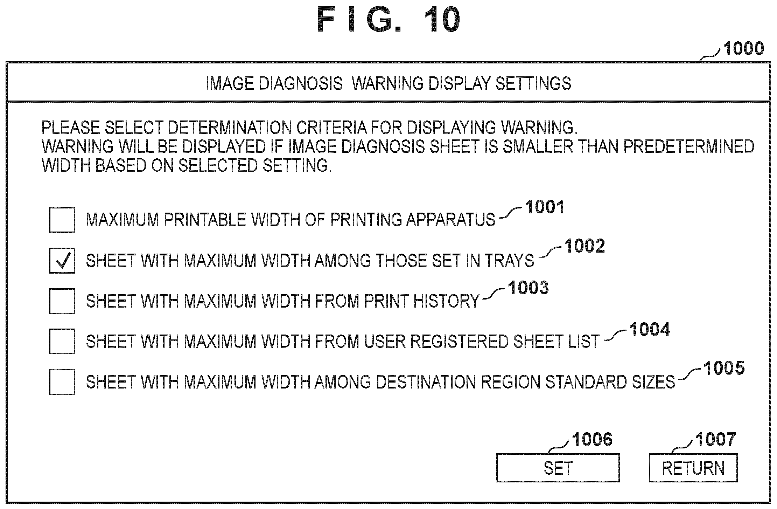

An example of a warning settings screen 1000 for switching the criteria for determining a warning display according to the present embodiment will be described with reference to FIG. 10. In the present embodiment, the warning settings screen 1000 is displayed on the display unit 241 of the image diagnosis apparatus 109. However, the warning settings screen 1000 may be displayed on the display 225 of the printing apparatus 107 or the display 212 of the external controller 102. The warning settings screen 1000 includes various types of settings 1001 to 1005 for switching the predetermined width, which is a determination criteria for displaying a warning when setting the sheet, a set button 1006, and a return button 1007. The warning settings screen 1000 may be displayed when the user operates a warning display settings button (not illustrated) in the sheet settings screen 700, for example. Alternatively, a warning display settings button may be provided on a settings screen (not illustrated) for setting the overall system settings of the image diagnosis apparatus 109.

1001 to 1005 denote the selection items of the selectable determination criteria. 1001 indicates a method for setting the maximum printable width of the printing apparatus as the predetermined width. This is the setting value described in the first embodiment described above. When this is set, the user is always informed when a sheet with a non-diagnosis region is set.

1002 indicates a method for setting the sheet with the maximum width from among those set in the feed trays as the predetermined width. The CPU 238 references the information of the sheets currently set in the feed trays and determines the sheet with the maximum width. By setting the sheet with the maximum width from among those in the plurality of feed trays as the determination criteria, the sheet with the printable maximum width can be simply set without an operation by the user to switch the sheet or change settings.

1003 indicates a method for setting the sheet with the maximum width from the printing history of previously executed printing by the image forming apparatus 101 as the predetermined width. The CPU 238 sends a query to the CPU 222 of the printing apparatus 107 for the previous printing history information and determines the sheet with the maximum width from among the sheets that have been previously used by the user in a print job. By setting the maximum width from among the sheets that have been used before as the determination criteria, a warning can be displayed in a state that takes into account the printing operation environment of the user.

1004 indicates a method for setting the sheet with the maximum width from a list of sheets with sheet information registered by the user using the image forming apparatus 101 as the predetermined width. The CPU 238 sends a query to the CPU 222 of the printing apparatus 107 for a user registered sheet list and determines the sheet with the maximum width from the sheet list. By setting the maximum width from the list of sheets registered for use by the user as the determination criteria, a warning can be displayed in a state that takes into account the printing operation environment of the user.

1005 indicates a method for setting the maximum width that can fit in the printable width of the printing apparatus from among standard sizes readily available and used as standard in the destination region as the predetermined width on the basis of destination information set as the environment in the image forming apparatus 101. The CPU 238 sends a query to the CPU 222 of the printing apparatus 107 for the destination information relating to the installation region set as the environment information and obtain the standard size information for the set destination. The CPU 238 determines the sheet closest to having the maximum width printable by the image forming apparatus 101 (maximum forming width by the image forming apparatus 101) from the standard sizes on the basis of the obtained standard size information.

1006 denotes the set button. When the set button 1006 is operated, the CPU 238 stores the width information selected from 1001 to 1005 in the memory 239 as the predetermined width information to be used as the comparison target in step S403. 1007 denotes the return button. When the return button 1007 is operated, the CPU 238 closes the warning settings screen 1000 and returns to the previously displayed screen.

As described above, according to the present embodiment, various sheet widths can be set as the predetermined width corresponding to a reference. Note that instead of setting these references as the maximum width usable in image diagnosis, the width may correspond to a reference for comparing the set width set at the time of image diagnosis. In other words, the user can perform image diagnosis using a sheet with a width that is greater than the predetermined width set as the reference, and use of a sheet with such a width is not restricted.

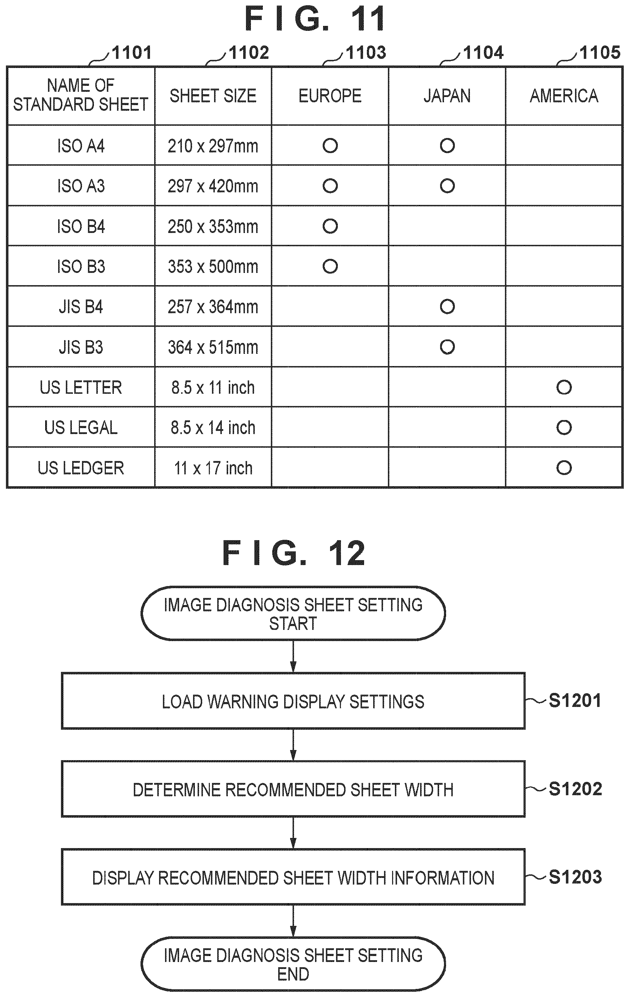

FIG. 11 illustrates an example of a table indicating the relationship between the destination and the typical standard sheet size according to the present embodiment. The present table is stored in the HDD 256, and the CPU 238 can invoke the table from the memory 239 and use it as necessary. 1101 denotes a standard sheet name list. 1102 denotes a list of size information of each sheet. 1103 to 1105 denote destination lists including the destinations of Europe, Japan, and America, in other words, region information, associated with the sheets typically used there. The relationship between the sheet list and the destination information is not limited to the contents given here as an example. Other sheets such as SRA3-sized sheets and B2-sized sheets that are typically used in the Japan but not standardized may also be in the sheet list. Also, the destination information is not limited to these three regions, and destination information of different groups of regions such as South American or Asia may be used, for example. By setting the standard size in the region where the image forming apparatus 101 is installed as the determination criteria, a comparison can be performed with a sheet that is readily available to the user and that they are familiar with.

As described above, the image diagnosis apparatus according to the present embodiment receives, from among a plurality of sheet widths, a sheet width set as the predetermined sheet width to be used as a reference according to a user operation. The plurality of sheet widths include a sheet width corresponding to the maximum forming width by the image forming unit, a sheet width which is the maximum from among the sheets set in the feed trays in the image forming unit, and a sheet width which is the maximum from among the sheets included in the image formation history of the image forming unit. Also, the plurality of sheet widths includes a sheet width which is the maximum from among sheets registered by the user and a sheet width which is the maximum from among sheets of a standard size used in the destination region. In this manner, according to the present embodiment, a warning can be displayed at a timing matching a request of the user by making a method selectable from among a plurality of methods for associating a predetermined sheet width to be compared with the width of the sheet to be used in image diagnosis with the printing operation environment of the user and determining the predetermined sheet width.

### Third Embodiment

The third embodiment of the present invention will be described below. In the method according to the first and second embodiment described above, in the sheet settings screen 700 for image diagnosis, when a feed tray is selected from the feed tray list 701 to use in printing by a user operation, a comparison with the predetermined width is performed using the set sheet of the feed tray. In the present embodiment described below, instead of a flow in which determination is triggered by the user selecting a feed tray, a method is used in which determination is automatically performed when the sheet settings screen 700 is displayed and the recommended sheet size is determined and notified to the user in advance.

### Sheet Setting Processing

The processing process of sheet setting processing according to the present embodiment will now be described with reference to FIG. 12. The processing described below is implemented by the CPU 238 of the image diagnosis apparatus 109, for example, loading a control program stored in the HDD 256 on the memory 239 and executing the control program. The present flow is started by the user operating the sheet settings button 604 on the diagnosis settings screen 600 of the display unit 241 via the operation unit 242 and invoking the sheet settings screen 700.

In step S1201, the CPU 238 loads the set content of the warning display settings described above in the second embodiment using FIG. 10 onto the memory 239. Regarding the settings loaded here, in a case where warning display setting has not been performed, default settings, for example, the printable maximum width, may be read out as the predetermined width. Next, in step S1202, the CPU 238 determines the recommended sheet width on the basis of the settings information loaded in step S1201. The sheet width in each setting is the same as the items 1001 to 1005 described above in the second embodiment and thus will not be described. In step S1203, the CPU 238 displays the recommended sheet width information determined in step S1202 on the sheet settings screen 700 to notify the user and ends the present flowchart processing.

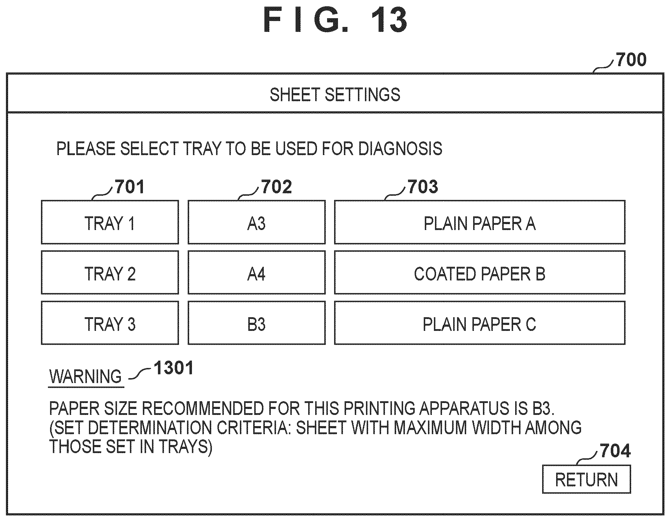

FIG. 13 illustrates an example of the sheet settings screen according to the present embodiment. 701 to 704 are the same as described using FIGS. 7A and 7B and thus will not be described. The CPU 238 displays a message 1301 on the sheet settings screen to notify the user of the recommended sheet width information. Here, as an example of the message, the recommended sheet size information and the determination criteria information set for the warning are displayed.

As described above, when an operation for transitioning the screen to the sheet settings screen is performed, the image diagnosis apparatus according to the present embodiment determines the sheet width recommended for use in image diagnosis and displays that the determined sheet width is recommended as the sheet to use in image diagnosis on the sheet settings screen. According to the present embodiment, when the user attempts to select the sheet to use in image diagnosis, the user can be notified in advance of the appropriate sheet size information determined on the basis of the warning display settings. Accordingly, the user can comprehend which size sheet to set at the time of sheet setting.

### Fourth Embodiment

The fourth embodiment of the present invention will be described below. In the method according to the first to third embodiments, it is assumed that the user manually selects the sheet for image diagnosis, and the user is notified in advance of a warning in the case of non-diagnosis region being produced in the selected sheet or of recommended sheet information. In the method according to the present embodiment described below, in a case where there is sheet information recommended in the sheet settings for image diagnosis in the feed tray, the system automatically performs sheet settings. A method in which a feed tray set with a sheet with a width less than the sheet width of the recommended sheet is made to be unable to be selected will also be described.

### Sheet Setting Processing

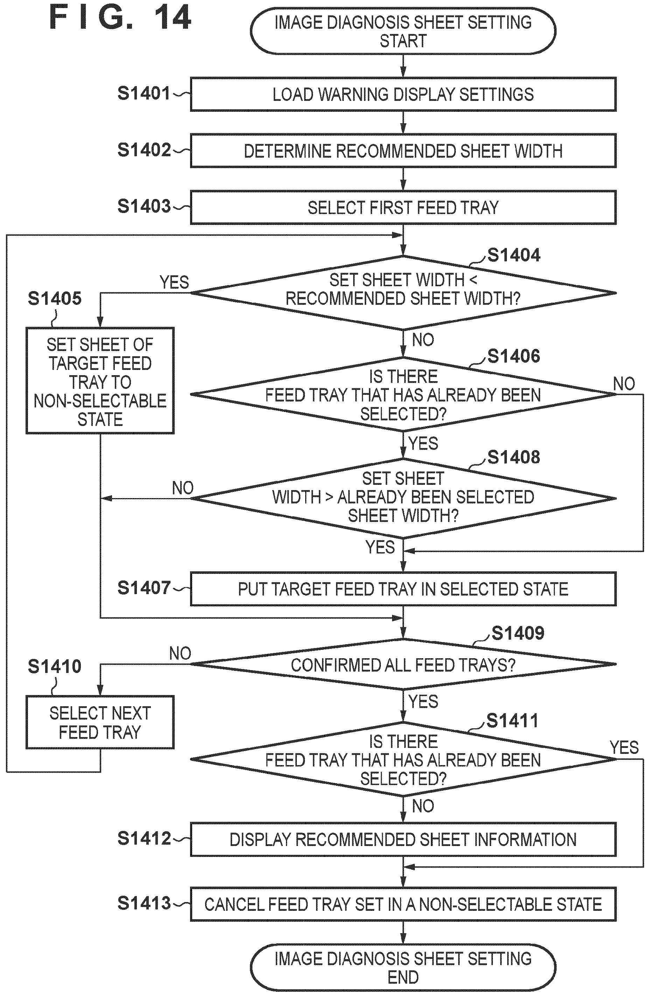

The processing process of sheet setting processing according to the present embodiment will now be described with reference to FIG. 14. The processing described below is implemented by the CPU 238 of the image diagnosis apparatus 109, for example, loading a control program stored in the HDD 256 on the memory 239 and executing the control program. The present flow is started by the user operating the sheet settings button 604 on the diagnosis settings screen 600 of the display unit 241 via the operation unit 242 and invoking the sheet settings screen 700.

Steps S1401 and S1402 are similar in processing to the steps S1201 and S1202 described above and thus will not be described. In the time up until here, the CPU 238 determines the recommended sheet width information. Next, in step S1403, the CPU 238 selects a first feed tray from among the plurality of feed trays and then proceeds to the next step.

In step S1404, the CPU 238 compares the sheet width set for the feed tray selected in step S 1403 and the recommended sheet width determined in step S1402. In a case where the set sheet width is smaller than the recommended sheet width (YES), step S1405 is proceeded to. In a case where the set sheet width is equal to or larger than the recommended sheet width (NO), step S1406 is proceeded to. In step S1405, the CPU 238 sets the sheet of the target feed tray to a non-selectable state and proceeds to step S1409. The non-selectable state will be described below.

On the other hand, in step S1406, the CPU 238 determines whether or not there is a feed tray that has already been selected. In a case where no feed tray has already been selected (NO), step S1407 is proceeded to. In a case where there is a feed tray that has already been selected (YES), step S1408 is proceeded to. This assumes that from among the plurality of feed tray, there are a plurality of feed trays set with a sheet that satisfies the condition.

In step S1407, the CPU 238 controls the target feed tray to be in a selected state and proceeds to step S1409. The selected state will be described below. On the other hand, in step S1408, the CPU 238 compares the sheet width currently set for the currently selected feed tray and the already selected sheet width. In a case where the sheet width of the currently selected feed tray is larger than the already selected sheet widths (YES), step S1407 is proceeded to, and the CPU 238 newly sets the feed tray set with the larger sheet to the selected state. On the other hand, in a case where the already selected sheet widths are the same or larger (NO), step S1409 is proceeded to.

In step S1409, the CPU 238 determines whether or not the flow from step S1404 to step S1408 has been executed for all of the feed trays. In a case where there is a feed tray for which it has not been executed (NO), step S1410 is proceeded to. In a case where all of the feed trays are confirmed (YES), step S1411 is proceeded to. In step S1410, the CPU 238 selects the next unconfirmed feed tray, returns the processing to step S1404, and continues the processing flow.

In step S1411, the CPU 238 determines whether or not a feed tray that satisfies the condition is in the selected state. In a case where there is a feed tray that has already been selected (YES), step S1413 is proceeded to. In a case where there is no feed tray that has already been selected (NO), step S1412 is proceeded to. In step S1412, the CPU 238 displays the recommended sheet information determined in step S1402 and proceeds to step S1413. Here, since the sheet that satisfies the condition is not in the current feed tray, the recommended sheet information is displayed in the hope of prompting the user to change the sheet. In step S1413, the CPU 238 cancels the state of the feed tray set in a non-selectable state in step S1405 and ends the processing of the present flowchart. When this ends, the sheet setting processing flow ends.

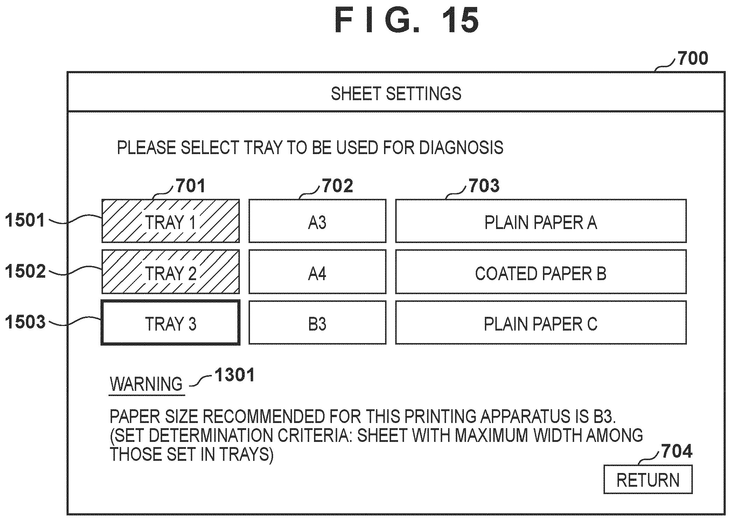

FIG. 15 illustrates an example of the sheet settings screen according to the present embodiment. 701 to 704 and 1301 are the same as described using FIG. 13 and thus will not be described. 1501 and 1502 represent information that the feed tray has been determined to be non-selectable in step S1405. Here in this example, the CPU 238 performs control so that there is no response even if the user operates the button and displays the color of the button grayed out, for example, so that this state is identifiable for the user. However, another method may be used to make the non-selectable state identifiable. 1503 represents information that the feed tray has been put in a selected state in step S1407.

As described above, when an operation for transitioning the screen to the sheet settings screen is performed, the image diagnosis apparatus according to the present embodiment determines the sheet width recommended for use in image diagnosis and displays a sheet settings screen with the determined sheet width controlled to be in a selected state. In this manner, according to the present embodiment, the system determines the sheet settings of image diagnosis and automatically sets a feed tray satisfying the condition to the selected state, thus removing the need for the user to make a determination and select the sheet. Also, graying out and putting the feed tray that does not satisfy the condition into the non-selectable state has the effect of preventing the user from erroneously selecting a feed tray set with a smaller sheet without being aware of it.

In the present embodiment, lastly, in step S1413, the feed tray in a non-selectable state is cancelled, but in another method for cancelling, a pop-up display for whether or not to cancel may be performed when the user operates the tray button 1501 while in the non-selectable state.

### Fifth Embodiment

The fifth embodiment of the present invention will be described below. In the present embodiment, a method for constantly displaying a warning on the sheet settings screen will be described.

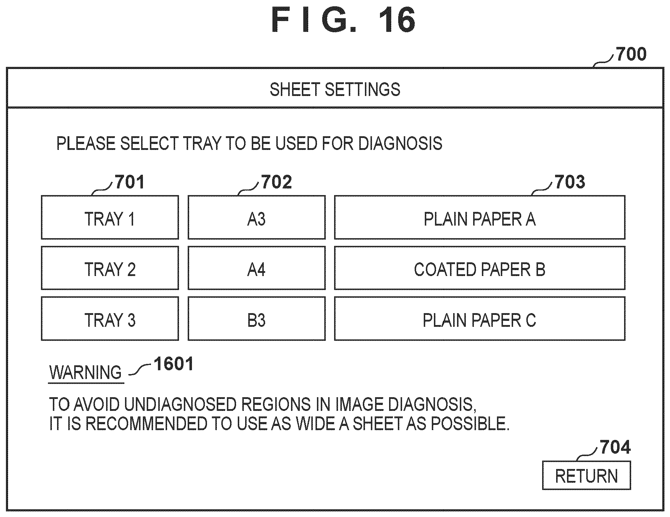

FIG. 16 illustrates an example of the sheet settings screen according to the present embodiment. 701 to 704 are the same as described using FIGS. 7A and 7B and thus will not be described. The CPU 238 constantly displays a message 1601 recommending the use of a sheet with the largest width possible in the image diagnosis on the sheet settings screen 700. The message displayed here may be content simply saying to set a sheet with a larger width or content communicating detailed sheet size information on the basis of each recommended sheet width set in the warning display settings described above.

As described above, the image diagnosis apparatus according to the present embodiment displays information relating to the sheet suitable for image diagnosis on a displayed screen in settings relating to image diagnosis. In this manner, by the warning being constantly displayed, the user can be made aware that the image width of the sheet set for image diagnosis affects the diagnosis region.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

The following numbered clauses also form a part of the present disclosure:
1. An image diagnosis apparatus comprising:
   diagnosis means for reading, by reading means, a sheet with an image formed conveyed from image forming means and diagnosing an abnormality of an apparatus by detecting an abnormality in a read image;
   setting means for performing setting relating to image diagnosis according to a user operation, and
   controlling means for supporting a user in setting a sheet more suitable as a sheet to be used in image diagnosis when performing setting for a sheet to be used in image diagnosis.
2. The image diagnosis apparatus according to clause 1, wherein
   when selection of a sheet to be used in image diagnosis is received via a sheet settings screen, the control means compares a sheet width of a selected sheet and a predetermined sheet width and, in a case where the predetermined sheet width is larger, displays a warning on the sheet settings screen that an undiagnosed region is produced by a forming width of the image forming means.
3. The image diagnosis apparatus according to clause 2, wherein
   the setting means receives a sheet width to set as the predetermined sheet width according to a user operation from among a sheet width corresponding to a maximum forming width by the image forming means, a sheet width which is a maximum from among sheets set in feed trays in the image forming means, a sheet width which is a maximum from among sheets included in image formation history of the image forming means, a sheet width which is a maximum from among sheets registered by a user, and a sheet width which is a maximum from among sheets of a standard size used in a destination region.
4. The image diagnosis apparatus according to clause 3, wherein
   when an operation for transitioning to the sheet settings screen is performed, the controlling means determines a recommended sheet width for use in image diagnosis and displays that a determined sheet width is recommended as a sheet to use in image diagnosis on the sheet settings screen.
5. The image diagnosis apparatus according to clause 4, wherein
   the controlling means determines the recommended sheet width on a basis of the predetermined sheet width.
6. The image diagnosis apparatus according to any one of clauses 3-5, wherein
   when an operation for transitioning to the sheet settings screen is performed, the controlling means determines a recommended sheet width for use in image diagnosis and displays the sheet settings screen with a determined sheet width controlled to be in a selected state.
7. The image diagnosis apparatus according to clause 6, wherein
   the controlling means controls a sheet width different to the recommended sheet width to be in a non-selectable state on the sheet settings screen.
8. The image diagnosis apparatus according to clause 7, wherein
   the controlling means displays a sheet width controlled to be in the non-selectable state in an identifiable manner on the sheet settings screen.
9. The image diagnosis apparatus according to any one of clauses 1-8, wherein
   the controlling means displays information relating to a sheet suitable for image diagnosis on a screen displayed in the settings relating to image diagnosis.
10. A method for controlling an image diagnosis apparatus that reads, by reading means, a sheet with an image formed conveyed from image forming means and diagnoses an abnormality of an apparatus by detecting an abnormality in a read image, the method comprising:
   performing setting relating to image diagnosis according to a user operation; and
   performing control to support a user in setting a sheet more suitable as a sheet to be used in image diagnosis when performing setting for a sheet to be used in image diagnosis.
11. An image forming apparatus comprising:
   image forming means for forming an image on a sheet;
   reading means for reading a sheet with an image formed;
   diagnosis means for reading, by the reading means, a sheet with an image formed conveyed from the image forming means and diagnosing an abnormality of an apparatus by detecting an abnormality in a read image,
   setting means for performing setting relating to image diagnosis according to a user operation, and
   controlling means for supporting a user in setting a sheet more suitable as a sheet to be used in image diagnosis when performing setting for a sheet to be used in image diagnosis.

## Claims

1. An image diagnosis apparatus comprising:
diagnosis means for reading, by a reading means, a sheet having an image formed thereon by an image forming means and diagnosing an abnormality of the image forming means by detecting an abnormality in a read image of the sheet;
setting means for performing setting relating to a sheet width setting for a sheet to be used in image diagnosis according to a user operation, and
controlling means for supporting a user in setting a sheet width more suitable as a sheet to be used in image diagnosis when performing setting relating to a sheet width setting for a sheet to be used in image diagnosis.

2. The image diagnosis apparatus according to claim 1, wherein
when selection of a sheet to be used in image diagnosis is received via a sheet settings screen, the control means compares a sheet width of a selected sheet and a predetermined sheet width and, in a case where the predetermined sheet width is larger, displays a warning on the sheet settings screen that an undiagnosed region is produced by a forming width of the image forming means.

3. The image diagnosis apparatus according to claim 2, wherein
the setting means receives a sheet width to set as the predetermined sheet width according to a user operation from among a sheet width corresponding to a maximum forming width by the image forming means, a sheet width which is a maximum from among sheets set in feed trays in the image forming means, a sheet width which is a maximum from among sheets included in image formation history of the image forming means, a sheet width which is a maximum from among sheets registered by a user, and a sheet width which is a maximum from among sheets of a standard size used in a destination region.

4. The image diagnosis apparatus according to claim 3, wherein
when an operation for transitioning to the sheet settings screen is performed, the controlling means determines a recommended sheet width for use in image diagnosis and displays that a determined sheet width is recommended as a sheet to use in image diagnosis on the sheet settings screen.

5. The image diagnosis apparatus according to claim 4, wherein
the controlling means determines the recommended sheet width on a basis of the predetermined sheet width.

6. The image diagnosis apparatus according to any one of claims 3-5, wherein
when an operation for transitioning to the sheet settings screen is performed, the controlling means determines a recommended sheet width for use in image diagnosis and displays the sheet settings screen with a determined sheet width controlled to be in a selected state.

7. The image diagnosis apparatus according to claim 6, wherein
the controlling means controls a sheet width different to the recommended sheet width to be in a non-selectable state on the sheet settings screen.

8. The image diagnosis apparatus according to claim 7, wherein
the controlling means displays a sheet width controlled to be in the non-selectable state in an identifiable manner on the sheet settings screen.

9. The image diagnosis apparatus according to any one of claims 1-8, wherein
the controlling means displays information relating to a sheet suitable for image diagnosis on a screen displayed in the settings relating to image diagnosis.

10. A method for controlling an image diagnosis apparatus that reads, by a reading means, a sheet having an image formed thereon by an image forming means and diagnoses an abnormality of the image forming means by detecting an abnormality in a read image of the sheet, the method comprising:
performing setting relating to a sheet width setting for a sheet to be used in image diagnosis according to a user operation; and
performing control to support a user in setting a sheet width more suitable as a sheet to be used in image diagnosis when performing setting relating to a sheet width setting for a sheet to be used in image diagnosis.

11. An image forming apparatus comprising:
image forming means for forming an image on a sheet;
reading means for reading a sheet with an image formed;
diagnosis means for reading, by the reading means, a sheet having an image formed thereon by the image forming means and diagnosing an abnormality of the image forming means by detecting an abnormality in a read image of the sheet,
setting means for performing setting relating to a sheet width setting for a sheet to be used in image diagnosis according to a user operation, and
controlling means for supporting a user in setting a sheet width more suitable as a sheet to be used in image diagnosis when performing setting relating to a sheet width setting for a sheet to be used in image diagnosis.

12. An image diagnosis apparatus comprising:
diagnosis means for reading, by a reading means, a sheet having an image formed thereon by an image forming means and diagnosing an abnormality of the image forming means by detecting an abnormality in a read image of the sheet;
setting means for configuring one or more settings relating to image diagnosis according to a user operation, the one or more settings comprising a sheet width setting for a sheet to be used in image diagnosis; and
controlling means for determining whether the sheet width setting configured according to the user operation is smaller than a predetermined width setting.

13. A method for controlling an image diagnosis apparatus that reads, by a reading means, a sheet having an image formed thereon by an image forming means and diagnoses an abnormality of the image forming means by detecting an abnormality in a read image of the sheet, the method comprising:
configuring one or more settings relating to image diagnosis according to a user operation, the one or more settings comprising a sheet width setting for a sheet to be used in image diagnosis; and
determining whether the sheet width setting configured according to the user operation is smaller than a predetermined width setting.

14. An image forming apparatus comprising:
image forming means for forming an image on a sheet;
reading means for reading a sheet with an image formed thereon; and
an image diagnosis apparatus according to claim 12.

## Patentansprüche

1. Bilddiagnosevorrichtung, die Folgendes umfasst:
eine Diagnoseeinrichtung zum Lesen, durch eine Leseeinrichtung, eines Bogens mit einem darauf durch eine Bilderzeugungseinrichtung erzeugten Bild und zum Diagnostizieren einer Abnormalität der Bilderzeugungseinrichtung durch Detektieren einer Abnormalität in einem gelesenen Bild des Bogens;
eine Einstelleinrichtung zum Durchführen einer Einstellung bezüglich einer Bogenbreiteneinstellung für einen bei der Bilddiagnose zu verwendenden Bogen gemäß einer Benutzerbedienung; und
eine Steuereinrichtung zum Unterstützen eines Benutzers beim Einstellen einer Bogenbreite, die besser als ein bei der Bilddiagnose zu verwendender Bogen geeignet ist, wenn eine Einstellung bezüglich einer Bogenbreiteneinstellung für einen bei der Bilddiagnose zu verwendenden Bogen durchgeführt wird.

2. Bilddiagnosevorrichtung nach Anspruch 1, wobei
wenn eine Auswahl eines bei der Bilddiagnose zu verwendenden Bogens über einen Bogeneinstellungsbildschirm empfangen wird, die Steuereinrichtung eine Bogenbreite eines ausgewählten Bogens und eine vorbestimmte Bogenbreite vergleicht und in einem Fall, in dem die vorbestimmte Bogenbreite größer ist, eine Warnung auf dem Bogeneinstellungsbildschirm anzeigt, dass ein nicht diagnostizierter Bereich durch eine Erzeugungsbreite der Bilderzeugungseinrichtung erzeugt wird.

3. Bilddiagnosevorrichtung nach Anspruch 2, wobei
die Einstelleinrichtung eine Bogenbreite, die als die vorbestimmte Bogenbreite gemäß einer Benutzerbedienung einzustellen ist, aus einer Bogenbreite, die einer maximalen Erzeugungsbreite durch die Bilderzeugungseinrichtung entspricht, einer Bogenbreite, die ein Maximum aus Bögen ist, die in Zuführfächern in der Bilderzeugungseinrichtung eingestellt sind, einer Bogenbreite, die ein Maximum aus Bögen ist, die in einem Bilderzeugungsverlauf der Bilderzeugungseinrichtung enthalten sind, einer Bogenbreite, die ein Maximum aus Bögen ist, die durch einen Benutzer registriert sind, und einer Bogenbreite, die ein Maximum aus Bögen einer Standardgröße ist, die in einem Zielgebiet verwendet wird, empfängt.

4. Bilddiagnosevorrichtung nach Anspruch 3, wobei
wenn eine Bedienung zum Wechseln zu dem Bogeneinstellungsbildschirm durchgeführt wird, die Steuereinrichtung eine empfohlene Bogenbreite zur Verwendung bei der Bilddiagnose bestimmt und auf dem Bogeneinstellungsbildschirm anzeigt, dass eine bestimmte Bogenbreite für einen bei der Bilddiagnose zu verwendenden Bogen empfohlen wird.

5. Bilddiagnosevorrichtung nach Anspruch 4, wobei die Steuereinrichtung die empfohlene Bogenbreite basierend auf der vorbestimmten Bogenbreite bestimmt.

6. Bilddiagnosevorrichtung nach einem der Ansprüche 3 bis 5,
wobei, wenn eine Bedienung zum Wechseln zu dem Bogeneinstellungsbildschirm durchgeführt wird, die Steuereinrichtung eine empfohlene Bogenbreite zur Verwendung bei der Bilddiagnose bestimmt und den Bogeneinstellungsbildschirm mit einer bestimmten Bogenbreite anzeigt, die so gesteuert wird, dass sie in einem ausgewählten Zustand ist.

7. Bilddiagnosevorrichtung nach Anspruch 6, wobei
die Steuereinrichtung eine Bogenbreite, die sich von der empfohlenen Bogenbreite unterscheidet, so steuert, dass sie in einem nicht auswählbaren Zustand auf dem Bogeneinstellungsbildschirm ist.

8. Bilddiagnosevorrichtung nach Anspruch 7, wobei die Steuereinrichtung eine Bogenbreite, die so gesteuert wird, dass sie in dem nicht auswählbaren Zustand ist, in einer identifizierbaren Weise auf dem Bogeneinstellungsbildschirm anzeigt.

9. Bilddiagnosevorrichtung nach einem der Ansprüche 1 bis 8,
wobei die Steuereinrichtung Informationen bezüglich eines Bogens, der für die Bilddiagnose geeignet ist, auf einem Bildschirm anzeigt, der in den Einstellungen bezüglich der Bilddiagnose angezeigt wird.

10. Verfahren zum Steuern einer Bilddiagnosevorrichtung, die durch eine Leseeinrichtung einen Bogen mit einem darauf durch eine Bilderzeugungseinrichtung erzeugten Bild liest und eine Abnormalität der Bilderzeugungseinrichtung durch Detektieren einer Abnormalität in einem gelesenen Bild des Bogens diagnostiziert, wobei das Verfahren Folgendes umfasst:
Durchführen einer Einstellung bezüglich einer Bogenbreiteneinstellung für einen bei der Bilddiagnose zu verwendenden Bogen gemäß einer Benutzerbedienung; und
Durchführen einer Steuerung zum Unterstützen eines Benutzers beim Einstellen einer Bogenbreite, die besser als ein bei der Bilddiagnose zu verwendender Bogen geeignet ist, wenn eine Einstellung bezüglich einer Bogenbreiteneinstellung für einen bei der Bilddiagnose zu verwendenden Bogen durchgeführt wird.

11. Bilderzeugungsvorrichtung, die Folgendes umfasst:
eine Bilderzeugungseinrichtung zum Erzeugen eines Bilds auf einem Bogen;
eine Leseeinrichtung zum Lesen eines Bogens mit einem erzeugten Bild;
eine Diagnoseeinrichtung zum Lesen, durch die Leseeinrichtung, eines Bogens mit einem darauf durch die Bilderzeugungseinrichtung erzeugten Bild und zum Diagnostizieren einer Abnormalität der Bilderzeugungseinrichtung durch Detektieren einer Abnormalität in einem gelesenen Bild des Bogens;
eine Einstelleinrichtung zum Durchführen einer Einstellung bezüglich einer Bogenbreiteneinstellung für einen bei der Bilddiagnose zu verwendenden Bogen gemäß einer Benutzerbedienung; und
eine Steuereinrichtung zum Unterstützen eines Benutzers beim Einstellen einer Bogenbreite, die besser als ein bei der Bilddiagnose zu verwendender Bogen geeignet ist, wenn eine Einstellung bezüglich einer Bogenbreiteneinstellung für einen bei der Bilddiagnose zu verwendenden Bogen durchgeführt wird.

12. Bilddiagnosevorrichtung, die Folgendes umfasst:
eine Diagnoseeinrichtung zum Lesen, durch eine Leseeinrichtung, eines Bogens mit einem darauf durch eine Bilderzeugungseinrichtung erzeugten Bild und zum Diagnostizieren einer Abnormalität der Bilderzeugungseinrichtung durch Detektieren einer Abnormalität in einem gelesenen Bild des Bogens;
eine Einstelleinrichtung zum Konfigurieren einer oder mehrerer Einstellungen bezüglich einer Bilddiagnose gemäß einer Benutzerbedienung, wobei die eine oder die mehreren Einstellungen eine Bogenbreiteneinstellung für einen bei der Bilddiagnose zu verwendenden Bogen umfassen; und
eine Steuereinrichtung zum Bestimmen, ob die gemäß der Benutzerbedienung konfigurierte Bogenbreiteneinstellung kleiner als eine vorbestimmte Breiteneinstellung ist.

13. Verfahren zum Steuern einer Bilddiagnosevorrichtung, die durch eine Leseeinrichtung einen Bogen mit einem darauf durch eine Bilderzeugungseinrichtung erzeugten Bild liest und eine Abnormalität der Bilderzeugungseinrichtung durch Detektieren einer Abnormalität in einem gelesenen Bild des Bogens diagnostiziert, wobei das Verfahren Folgendes umfasst:
Konfigurieren einer oder mehrerer Einstellungen bezüglich einer Bilddiagnose gemäß einer Benutzerbedienung, wobei die eine oder die mehreren Einstellungen eine Bogenbreiteneinstellung für einen bei der Bilddiagnose zu verwendenden Bogen umfassen; und
Bestimmen, ob die gemäß der Benutzerbedienung konfigurierte Bogenbreiteneinstellung kleiner als eine vorbestimmte Breiteneinstellung ist.

14. Bilderzeugungsvorrichtung, die Folgendes umfasst:
eine Bilderzeugungseinrichtung zum Erzeugen eines Bilds auf einem Bogen;
eine Leseeinrichtung zum Lesen eines Bogens mit einem darauf erzeugten Bild; und
eine Bilddiagnosevorrichtung nach Anspruch 12.

## Revendications

1. Appareil de diagnostic d'image comprenant :
un moyen de diagnostic pour lire, par un moyen de lecture, une feuille ayant une image formée sur celle-ci par un moyen de formation d'image et diagnostiquer une anomalie du moyen de formation d'image en détectant une anomalie dans une image lue de la feuille ;
un moyen de réglage pour réaliser un réglage relatif à un réglage de largeur de feuille pour une feuille devant être utilisée dans le diagnostic d'image selon une opération d'utilisateur, et
un moyen de commande pour aider un utilisateur à régler une largeur de feuille plus appropriée en tant que feuille devant être utilisée dans le diagnostic d'image lors de la réalisation d'un réglage relatif à un réglage de largeur de feuille pour une feuille devant être utilisée dans le diagnostic d'image.

2. Appareil de diagnostic d'image selon la revendication 1, dans lequel
lorsque la sélection d'une feuille devant être utilisée dans le diagnostic d'image est reçue via un écran de réglages de feuille, le moyen de commande compare une largeur de feuille d'une feuille sélectionnée et une largeur de feuille prédéterminée, et, dans un cas où la largeur de feuille prédéterminée est plus grande, affiche un avertissement sur l'écran de réglages de feuille indiquant qu'une région non diagnostiquée est produite par une largeur de formation du moyen de formation d'image.

3. Appareil de diagnostic d'image selon la revendication 2, dans lequel
le moyen de réglage reçoit une largeur de feuille à régler comme largeur de feuille prédéterminée selon une opération d'utilisateur parmi une largeur de feuille correspondant à une largeur de formation maximale par le moyen de formation d'image, une largeur de feuille qui est un maximum parmi des feuilles placées dans des plateaux d'alimentation dans le moyen de formation d'image, une largeur de feuille qui est un maximum parmi des feuilles comprises dans l'historique de formation d'image du moyen de formation d'image, une largeur de feuille qui est un maximum parmi des feuilles enregistrées par un utilisateur, et une largeur de feuille qui est un maximum parmi des feuilles d'une taille standard utilisées dans une région de destination.

4. Appareil de diagnostic d'image selon la revendication 3, dans lequel
lorsqu'une opération de transition vers l'écran de réglages de feuille est réalisée, le moyen de commande détermine une largeur de feuille recommandée pour une utilisation dans le diagnostic d'image et affiche la recommandation d'une largeur de feuille déterminée comme feuille à utiliser dans le diagnostic d'image sur l'écran de réglages de feuille.

5. Appareil de diagnostic d'image selon la revendication 4, dans lequel
le moyen de commande détermine la largeur de feuille recommandée sur la base de la largeur de feuille prédéterminée.

6. Appareil de diagnostic d'image selon l'une quelconque des revendications 3 à 5, dans lequel
lorsqu'une opération de transition vers l'écran de réglages de feuille est réalisée, le moyen de commande détermine une largeur de feuille recommandée pour une utilisation dans le diagnostic d'image et affiche l'écran de réglages de feuille avec une largeur de feuille déterminée commandée pour être dans un état sélectionné.

7. Appareil de diagnostic d'image selon la revendication 6, dans lequel
le moyen de commande commande une largeur de feuille différente de la largeur de feuille recommandée pour qu'elle soit dans un état non sélectionnable sur l'écran de réglages de feuille.

8. Appareil de diagnostic d'image selon la revendication 7, dans lequel
le moyen de commande affiche une largeur de feuille commandée pour qu'elle soit dans l'état non sélectionnable d'une manière identifiable sur l'écran de réglages de feuille.

9. Appareil de diagnostic d'image selon l'une quelconque des revendications 1 à 8, dans lequel
le moyen de commande affiche des informations relatives à une feuille appropriée pour le diagnostic d'image sur un écran affiché dans les réglages relatifs au diagnostic d'image.

10. Procédé pour commander un appareil de diagnostic d'image qui lit, par un moyen de lecture, une feuille ayant une image formée sur celle-ci par un moyen de formation d'image et diagnostique une anomalie du moyen de formation d'image en détectant une anomalie dans une image lue de la feuille, le procédé comprenant :
la réalisation d'un réglage relatif à un réglage de largeur de feuille pour une feuille devant être utilisée dans le diagnostic d'image selon une opération d'utilisateur ; et la réalisation d'une commande pour aider un utilisateur à régler une largeur de feuille plus appropriée en tant que feuille devant être utilisée dans le diagnostic d'image lors de la réalisation d'un réglage relatif à un réglage de largeur de feuille pour une feuille devant être utilisée dans le diagnostic d'image.

11. Appareil de formation d'image comprenant :
un moyen de formation d'image pour former une image sur une feuille ;
un moyen de lecture pour lire une feuille avec une image formée ;
un moyen de diagnostic pour lire, par le moyen de lecture, une feuille ayant une image formée sur celle-ci par le moyen de formation d'image et diagnostiquer une anomalie du moyen de formation d'image en détectant une anomalie dans une image lue de la feuille,
un moyen de réglage pour réaliser un réglage relatif à un réglage de largeur de feuille pour une feuille devant être utilisée dans le diagnostic d'image selon une opération d'utilisateur, et
un moyen de commande pour aider un utilisateur à régler une largeur de feuille plus appropriée en tant que feuille devant être utilisée dans le diagnostic d'image lors de la réalisation d'un réglage relatif à un réglage de largeur de feuille pour une feuille devant être utilisée dans le diagnostic d'image.

12. Appareil de diagnostic d'image comprenant :
un moyen de diagnostic pour lire, par un moyen de lecture, une feuille ayant une image formée sur celle-ci par un moyen de formation d'image et diagnostiquer une anomalie du moyen de formation d'image en détectant une anomalie dans une image lue de la feuille ;
un moyen de réglage pour configurer un ou plusieurs réglages relatifs au diagnostic d'image selon une opération d'utilisateur, les un ou plusieurs réglages comprenant un réglage de largeur de feuille pour une feuille devant être utilisée dans le diagnostic d'image ; et
un moyen de commande pour déterminer si le réglage de largeur de feuille configuré selon l'opération d'utilisateur est inférieur à un réglage de largeur prédéterminé.

13. Procédé pour commander un appareil de diagnostic d'image qui lit, par un moyen de lecture, une feuille ayant une image formée sur celle-ci par un moyen de formation d'image et diagnostique une anomalie du moyen de formation d'image en détectant une anomalie dans une image lue de la feuille, le procédé comprenant :
la configuration d'un ou plusieurs réglages relatifs au diagnostic d'image selon une opération d'utilisateur, les un ou plusieurs réglages comprenant un réglage de largeur de feuille pour une feuille devant être utilisée dans le diagnostic d'image ; et
le fait de déterminer si le réglage de largeur de feuille configuré selon l'opération d'utilisateur est inférieur à un réglage de largeur prédéterminé.

14. Appareil de formation d'image comprenant :
un moyen de formation d'image pour former une image sur une feuille ;
un moyen de lecture pour lire une feuille avec une image formée sur celle-ci ; et
un appareil de diagnostic d'image selon la revendication 12.
